# FASCICULE DE BREVET EUROPEEN

(11) **EP 1 625 296 B1**
(45) Date de publication et mention de la délivrance du brevet: **02.01.2008**
(21) Numéro de dépôt: 04742761.2
(22) Date de dépôt: 17.05.2004
(51) Int. Cl.: F02D 41/02, F02D 41/40

(54) **PROCEDE ET SYSTEME DE GESTION DE LA REGENATION D'UN FILTRE A PARTICULES ET MOTEUR A COMBUSTION INTERNE EQUIPE D'UN TEL FILTRE A PARTICULES**
VERFAHREN UND SYSTEM ZUR STEUERUNG DER REGENRATION EINES PARTIKELFILTERS UND VERBRENNUNGSMOTOR MIT EINEM SOLCHEN PARTIKELFILTER
METHOD AND SYSTEM FOR CONTROLLING THE REGENERATION OF A PARTICULATE FILTER, AND INTERNAL COMBUSTION ENGINE PROVIDED WITH ONE SUCH PARTICULATE FILTER

(30) Priorité: 22.05.2003 FR 0306175
(43) Date de publication de la demande: 15.02.2006
(73) Titulaire: RENAULT S.A.S., 92100 Boulogne Billancourt (FR)
(72) Inventeur: BESNARD, Jean, Jacques, F-75014 Paris (FR); CRUCHET, Jérôme, F-91650 Breuillet (FR); MARCELLY, Bruno, F-91590 Cerny (FR)
(86) Numéro de dépôt international: PCT/FR2004/001213
(87) Numéro de publication internationale: WO 2004/106719

(56) Documents cités:
- EP-A- 1 160 435
- DE-A- 19 923 299
- FR-A- 2 799 508
- US-B1- 6 412 276

## Description

La présente invention concerne un procédé de gestion du fonctionnement d'un système d'échappement d'un moteur à combustion interne, du type comprenant un filtre à particules et des moyens pilotés d'aide à la régénération du filtre.

Les normes concernant la pollution et la consommation des moteurs à combustion interne équipant notamment les véhicules automobiles routiers se durcissent de plus en plus dans l'ensemble des pays industrialisés. L'industrie automobile cherche des solutions techniques pour répondre à ces obligations sans nuire aux performances des moteurs ni augmenter leur prix de revient.

Parmi les systèmes connus pour éliminer les particules de suies émises par les moteurs à combustion interne et en particulier par les moteurs Diesel, on peut citer les filtres à particules insérés dans les lignes d' échappement des moteurs. Ces filtres sont adaptés pour piéger les particules de suies contenues dans les gaz d'échappement. Des dispositifs de régénération pilotés permettent de brûler périodiquement les particules piégées dans les filtres et d'éviter le colmatage de ces derniers.

En effet, les particules de suies brûlent à des températures de l'ordre de 550 à 600°C. Ces températures sont rarement atteintes par les gaz d'échappement d'un moteur Diesel automobile. A titre d'exemple, en ville, la température des gaz d'échappement est généralement comprise entre 150 et 250°C. Il est donc nécessaire de disposer de moyens appropriés pour élever la température des gaz lorsqu'on souhaite régénérer un tel filtre à particules.

Différents systèmes ont été proposés. Des systèmes de chauffage par résistance électrique, notamment des grilles chauffantes, permettent de porter la température des gaz d'échappement à une valeur suffisante pour provoquer la combustion des particules dans le filtre.

D'autres systèmes proposent d'augmenter la température des gaz d'échappement par injection d'une quantité supplémentaire de carburant dans au moins une des chambres de combustion sous la forme d'une post-injection. Après avoir injecté la quantité de carburant nécessaire au fonctionnement classique du moteur, une quantité supplémentaire de carburant est injectée dans un second temps. Une partie de cette quantité de carburant additionnelle s'enflamme en produisant une augmentation de la température des gaz d'échappement, le reste est transformé en produit d'oxydation partielle comme le monoxyde de carbone CO et les hydrocarbures HC.

Le monoxyde de carbone et les hydrocarbures peuvent également participer à l'augmentation de la température des gaz d'échappement en réagissant par des réactions exothermiques avant leur arrivée dans le filtre à particules. Les réactions exothermiques sont obtenues lors de la traversée d'un catalyseur d'oxydation disposé en amont du filtre à particules. Par ailleurs, pour minimiser la dépense énergétique nécessaire à la combustion des particules de suies, il est également connu d'abaisser la température de combustion des suies en utilisant des catalyseurs appropriés. Ainsi, il est connu d'ajouter dans le carburant un additif, tel qu'un composé organométallique. L'additif se retrouve dans les particules de suies, ce qui lui permet de jouer un rôle catalytique lors de la combustion des particules de suies et d'abaisser les températures d'inflammation de ces dernières.

La mise en action de ces différents systèmes d'aide à la régénération est pilotée par un système électronique de commande qui détermine en fonction d'un certain nombre de paramètres et notamment du chargement du filtre à particules, l'instant de la régénération.

Ainsi, le document FR 2 774 421 divulgue un système de gestion du fonctionnement d'un filtre à particules associé à un moteur Diesel et décrit la mise en action des moyens d'aide à la régénération qui est déclenchée lorsque la masse de suies dans le filtre est supérieure à un seuil. Cette masse de suies est déterminée à partir de la mesure de la perte de charge aux bornes du filtre à particules et des conditions de fonctionnement du moteur.

La connaissance de la masse de suies piégée est une donnée importante pour la commande des moyens d'aide à la régénération. Lorsque le niveau des suies est trop faible, il est très difficile de les faire brûler et lorsque la masse de suies est trop importante, la combustion fortement exothermique desdites suies risque de détruire le filtre.

Le document FR 2 802 972 propose de minimiser la durée de mise en action des moyens d'aide à la régénération pour limiter leur impact sur la consommation de carburant en déclenchant la mise en action des moyens d'aide à la régénération du filtre selon des critères prédéterminés, tels que le chargement en particules du filtre. Les paramètres de fonctionnement des moyens d'aide à la régénération, tels que la durée ou l'intensité, sont ajustés selon le déroulement de la régénération du filtre. L'initiation de la combustion peut être déterminée à partir de l'estimation ou de la mesure de l'énergie dégagée par le filtre. L'initiation de la combustion peut également être déterminée à partir d'une estimation de la température des gaz en sortie du filtre en faisant l'hypothèse qu'il n'y a pas de combustion dans le filtre et en comparant cette température estimée à la température réelle mesurée. L'extinction peut être déterminée de façon similaire. L'élévation de la température des gaz d'échappement en vue de l'initiation de la combustion des particules, peut être réalisée par une simple commande des injecteurs, par exemple en injectant, lors de la phase de détente, une quantité additionnelle de carburant, et ce, pendant un nombre donné de cycles du moteur. Un tel procédé donne satisfaction.

Toutefois, est apparu le besoin de maintenir la stabilité de la combustion dans le moteur à combustion interne et de réaliser un pilotage relativement fin de la température du filtre à particules. La plage de températures dans laquelle il faut piloter la régénération d'un filtre à particules catalytique, est relativement étroite, de l'ordre de 80°C. En dessous de la plage, la combustion ne peut avoir lieu, et au-dessus, il existe un risque de dégradation des éléments catalytiques du filtre à particules. De plus, la vitesse de combustion des suies varie fortement à l'intérieur de la plage. Il est donc apparu nécessaire de piloter la température du filtre à particules avec une précision de l'ordre de plus ou moins 20°C, tout en respectant, dans le cas d'un moteur turbocompressé, une température maximale en amont de la turbine. Or, pour un même point de fonctionnement du moteur défini par le régime et la charge, des grandeurs, telles que la contre-pression d'échappement, la température d'air à l'admission ou des dispersions de fabrication du moteur, peuvent conduire pour un même réglage des paramètres d'injection, à des dispersions de l'ordre de plus ou moins 80°C en amont du filtre.

Un but de la présente invention est de permettre la régénération d'un filtre à particules de type classique ou catalytique, en respectant la plage de température nécessaire, et ce le plus possible indépendamment des paramètres susceptibles d'influencer ladite température.

Le procédé de gestion de la régénération d'un filtre à particules équipant un moteur à combustion interne, selon un aspect de l'invention, comprend la mise en oeuvre d'une première injection de carburant et d'une injection principale de carburant, une quantité de carburant étant répartie entre la première injection et l'injection principale assurant le maintien du couple de consigne en faisant varier la quantité de carburant de la première injection pour compenser la variation de couple entraînée par la variation de quantité de carburant de l'injection principale en fonction de la température de combustion des particules du filtre à particules ou de la température en amont d'une turbine.

A conditions de fonctionnement constantes, la répartition d'une quantité de carburant entre la première injection et l'injection principale, permet d'augmenter ou de diminuer la température des gaz d'échappement entrant dans le filtre à particules. La variation de quantité de carburant de l'injection principale a une influence prépondérante sur la variation de température, tandis que la variation de quantité de carburant de la première injection a une influence prépondérante sur la compensation de la variation de couple entraînée par la variation de quantité de carburant de l'injection principale. On peut ainsi conserver un couple constant, ce qui permet de réaliser une régénération du filtre à particules sans que le conducteur ne perçoive de modification des conditions de fonctionnement de son véhicule.

Dans un mode de réalisation de l'invention, on mesure la température des gaz en amont du filtre à particules et en amont de la turbine.

Dans un autre mode de réalisation de l'invention, on estime la température des gaz en amont du filtre à particules.

Avantageusement, l'injection principale est retardée d'un angle ϕ non nul par rapport au point mort haut d'un piston correspondant.

Dans un mode de réalisation de l'invention, la première injection comprend deux phases d'injection. Une phase d'injection peut avoir lieu avant le point mort haut d'un piston correspondant et une autre phase d'injection après le point mort haut du même piston. Une phase d'injection peut avoir lieu immédiatement après le point mort haut d'un piston correspondant.

On augmente la quantité de carburant de l'injection principale tout en diminuant la quantité de carburant de la deuxième phase de la première injection pour augmenter la température de sortie des gaz d'échappement et initier ou entretenir la combustion des particules du filtre à particules, à couple constant. Inversement, on peut augmenter la quantité de carburant de la deuxième phase de la première injection et diminuer la quantité de carburant de l'injection principale.

Dans un mode de réalisation préféré de l'invention, la variation de la quantité de carburant de la première injection et celle de l'injection principale sont différentes, mais liées entre elles, par exemple par un modèle réalisé par une fonction logicielle qui assure le maintien du couple de consigne en se basant sur le rendement de combustion propre à chaque injection. Par exemple, lorsqu'on souhaite s'opposer à une augmentation de la température dans le filtre à particules, on diminue la quantité de carburant de l'injection principale d'une quantité Qₚ et on augmente la quantité de la deuxième phase de la première injection d'une quantité Q₁ < Qₚ calculée afin de maintenir le couple constant.

L'invention propose également un système de régénération d'un filtre à particules équipant un moteur à combustion interne. Le système comprend un moyen de répartition de carburant entre une première injection de carburant et une injection principale de carburant, assurant le maintien du couple de consigne en faisant varier la quantité de carburant de la première injection pour compenser la variation de couple entraînée par la variation de quantité de carburant de l'injection principale, en fonction de la température de combustion des particules du filtre à particules. On augmente la quantité de carburant de l'injection principale tout en diminuant la quantité de carburant de la première injection pour augmenter la température de sortie des gaz d'échappement et initier ou entretenir la combustion des particules du filtre à particules, à couple constant. Avantageusement, le système comprend un capteur de mesure de la température des gaz en amont du filtre à particules. Le système peut également comprendre un estimateur de la température des gaz en amont du filtre à particules.

Dans un mode de réalisation de l'invention, le système est relié à une unité de commande du moteur. Le système est apte à envoyer un ordre de répartition de carburant entre la première injection et l'injection principale.

L'invention propose également un moteur à combustion interne comprenant un système d'admission de carburant, une unité de pilotage apte à commander le système d'injection, un filtre à particules monté en sortie des gaz d'échappement et un système de régénération du filtre à particules pourvu d'un moyen de répartition de carburant entre une première injection de carburant et une injection principale de carburant, en fonction de la température de combustion des filtres à particules. Le système de régénération peut être relié à l'unité de pilotage en vue de lui envoyer les ordres adéquats.

L'invention permet donc un pilotage suffisamment précis de la température dans le filtre à particules avec maintien du couple fourni par le moteur et permet donc de mettre en oeuvre des filtres à particules catalytiques particulièrement efficaces mais nécessitant une plage de température de combustion étroite.

La présente invention sera mieux comprise à l'étude de la description détaillée de quelques modes de réalisation pris à titre d'exemples nullement limitatifs et illustrés par les dessins annexés, parmi lesquels :
- la figure 1 est une vue schématique d'un moteur à combustion interne équipé d'un filtre à particules, mettant en oeuvre le procédé selon un aspect de l'invention ;
- la figure 2 est un diagramme montrant les phases d'injection ; et
- les figures 3 et 4 sont des diagrammes montrant différents types de phases d'injection.

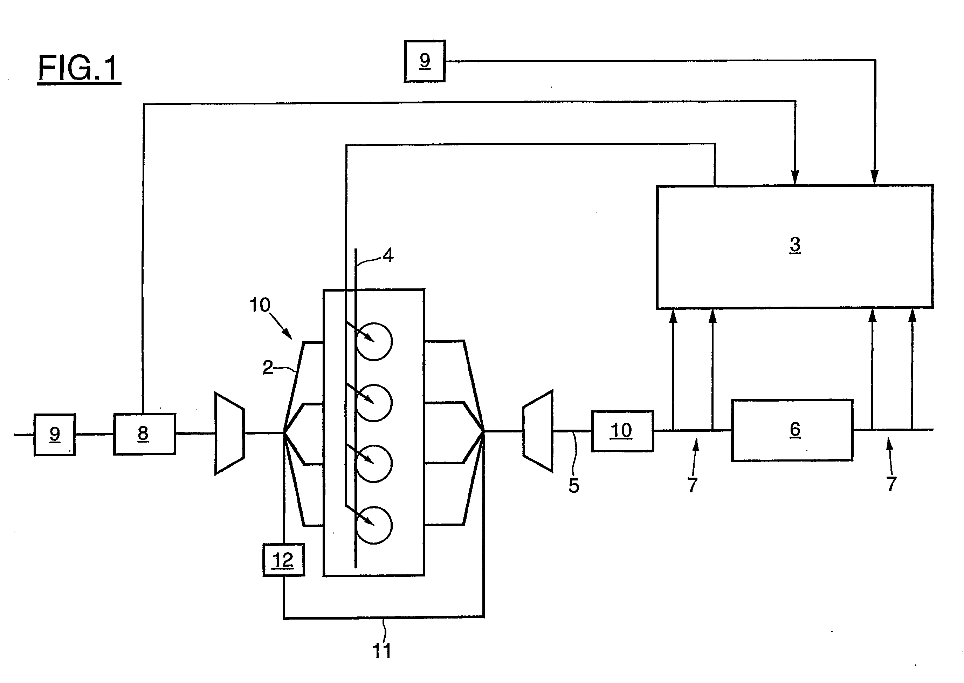

Sur la figure 1, seuls les éléments nécessaires à la compréhension de l'invention ont été représentés. Un moteur à combustion interne 1 est destiné à équiper un véhicule tel qu'une automobile. Le moteur 1 peut être un moteur Diesel suralimenté par turbocompresseur à quatre cylindres en ligne et injection directe de carburant. Le moteur 1 comprend un circuit d'admission 2 assurant son alimentation en air, un calculateur de contrôle moteur 3, un circuit de carburant sous pression 4, de type haute pression à rampe commune, et une ligne d'échappement 5. L'injection du carburant dans les cylindres est assurée par des injecteurs électromagnétiques, non représentés, débouchant dans les chambres de combustion et pilotés par le calculateur 3 à partir du circuit de carburant sous pression 4.

En sortie du moteur 1, les gaz d'échappement évacués dans la ligne d'échappement 5 traversent un filtre à particules 6. Différents capteurs 7, tels que des capteurs de pression et de température, sont placés en amont et en aval du filtre à particules 6 et fournissent au calculateur 3 des informations correspondantes. Un débitmètre d'air 8 est monté dans le circuit d'admission 2 pour fournir au calculateur 3 des informations de débit de l'air d'admission alimentant le moteur. Des capteurs de pression et de température 9 peuvent également être prévus. On peut également équiper la ligne d'échappement 5 d'un pot catalytique d'oxydation 10 traitant les émissions d'hydrocarbures à brûler HC et de monoxyde de carbone CO.

Le moteur 1 comprend également un circuit de recyclage de gaz d'échappement 11 équipé d'une vanne 12 dont l'ouverture est pilotée par le calculateur 3. On peut ainsi réintroduire des gaz d'échappement dans le circuit d'admission 2. Le calculateur 3 comprend, de façon classique, un microprocesseur ou unité centrale, des mémoires vives, des mémoires mortes, des convertisseurs analogiques/numériques et différentes interfaces d'entrée et de sortie.

Le microprocesseur du calculateur 3 comprend des circuits électroniques et les logiciels appropriés pour traiter les signaux en provenance des différents capteurs, en déduire les états du moteur et générer les signaux de commande appropriés à destination notamment des différents actuateurs pilotés tels que les injecteurs.

Le calculateur 3 commande donc la pression du carburant dans la rampe 4 et l'ouverture des injecteurs, et ce, à partir des informations délivrées par les différents capteurs et en particulier de la masse d'air admise, du régime moteur ainsi que de calibrations mémorisées permettant d'atteindre les niveaux de consommation et de performance souhaités. L'ouverture des injecteurs est plus particulièrement définie par l'instant de début d'injection et la durée d'ouverture des injecteurs, durée qui correspond pour une pression d'alimentation donnée à une quantité de carburant injectée et donc à une richesse du mélange remplissant les chambres de combustion.

Le calculateur 3 est également adapté pour assurer la gestion du fonctionnement du système d'échappement et notamment du filtre à particules 6. En particulier, le calculateur 3 déduit à partir des informations fournies, notamment par les capteurs de pression 7, le niveau de remplissage du filtre. Le calculateur 3 déclenche ensuite, en fonction de la valeur du chargement en suies du filtre, une phase de régénération conformément à des stratégies adaptées.

La phase de régénération consiste essentiellement à augmenter la température des gaz d'échappement traversant le filtre 6, de façon à réaliser la combustion des particules piégées. L'augmentation de la température est initiée par la mise en action de moyens d'aide à la régénération appropriés, en particulier une modification des conditions d'injection.

Bien évidemment, tout autre système de régénération de filtre fonctionnant par chauffage direct du filtre ou des suies, peut être mis en oeuvre.

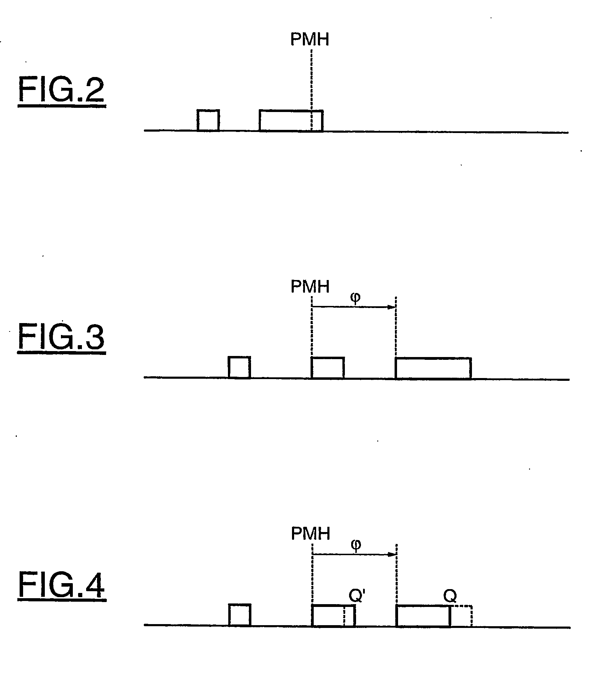

Sur la figure 2, est illustré le cas d'une injection normale comprenant une pré-injection, puis une période au cours de laquelle aucune injection n'est réalisée, et enfin une injection principale de durée deux à trois fois plus élevée que la pré-injection et située proche du point mort haut du piston dans le cylindre conventionnellement référé comme étant l'angle zéro du vilebrequin et noté PMH.

Sur la figure 3, est illustré le cas d'une pré-injection à deux phases d'injection, une première phase nettement avant le point mort haut, une deuxième phase débutant au point mort haut, les deux phases d'injection étant séparées par une phase de non-injection. L'injection principale est retardée et commence à l'angle ϕ après le point mort haut.

Sur la figure 4, est illustré le cas où l'on souhaite s'opposer à une augmentation de la température d'échappement: La durée de la première phase de pré-injection est maintenue. La durée de la deuxième phase de pré-injection est augmentée et la durée de l'injection principale est diminuée. Compte tenu de la pression constante dans la rampe commune d'injection, la quantité de carburant injectée est sensiblement proportionnelle à la durée de l'injection. On voit qu'on a diminué la quantité de carburant dans l'injection principale d'une quantité Qₚ afin de réduire la température à l'échappement du moteur. On a augmenté la quantité de la deuxième phase de la pré-injection d'une quantité Q₁ < Qₚ et calculée afin de maintenir constant le couple fourni par le moteur.

Au contraire, si l'on souhaite s'opposer à une diminution de la température d'échappement, on procèdera à l'augmentation de la quantité de carburant dans l'injection principale d'une quantité Qₚ pour augmenter la température de sortie des gaz d'échappement et donc la température du filtre à particules, et on diminuera la quantité de la deuxième phase de pré-injection d'une quantité Q₁ < Qₚ, également calculée afin de maintenir le couple constant. Le rapport entre les quantités Qₚ et Q₁ peut être déterminé au préalable et stocké dans une table ou déterminé d'après une fonction logicielle mise en oeuvre par le calculateur 3. Bien entendu, on tiendra compte du régime du moteur qui fait varier le rapport entre une plage d'angle vilebrequin et une durée temporelle et donc une quantité injectée.

Grâce à l'invention, on assure la régénération de filtres à particules, même de types variés, quel que soit l'état de chargement du filtre à particules, les conditions environnementales et les dispersions du moteur, tout en évitant la destruction du filtre par une température trop élevée. L'invention permet donc une augmentation de la fiabilité de la régénération et une réduction du risque de destruction du filtre, ainsi qu'une réduction de la consommation de carburant en évitant une température trop élevée obtenue par une augmentation de la quantité de carburant injecté.

## Revendications

1. Procédé de gestion de la régénération d'un filtre à particules (6) équipant un moteur (1) à combustion interne, dans lequel on met en oeuvre une première injection de carburant et une injection principale de carburant, une quantité de carburant étant répartie entre la première injection et l'injection principale assurant le maintien du couple de consigne en faisant varier la quantité de carburant de la première injection pour compenser la variation de couple entraînée par la variation de quantité de carburant de l'injection principale, en fonction de la température de combustion des particules du filtre à particules ou de la température en amont d'une turbine et on augmente la quantité de carburant de l'injection principale tout en diminuant la quantité de carburant de la première injection pour augmenter la température de sortie des gaz d'échappement et initier ou entretenir la combustion des particules du filtre à particules, à couple constant.

2. Procédé selon la revendication 1, dans lequel on mesure la température des gaz en amont du filtre à particules et en amont de la turbine.

3. Procédé selon la revendication 1, dans lequel on estime la température des gaz en amont du filtre à particules.

4. Procédé selon l'une quelconque des revendications précédentes, dans lequel l'injection principale est retardée d'un angle ϕ par rapport au point mort haut d'un piston correspondant.

5. Procédé selon l'une quelconque des revendications précédentes, dans lequel la première injection comprend deux phases d'injection.

6. Procédé selon la revendication 5, dans lequel une phase d'injection a lieu avant le point mort haut d'un piston correspondant et une phase d'injection a lieu après le point mort haut d'un piston correspondant.

7. Procédé selon la revendication 5, dans lequel une phase d'injection a lieu immédiatement après le point mort haut d'un piston correspondant.

8. système de régénération d'un filtre à particules (6) équipant un moteur (1) à combustion interne, **caractérisé par le fait qu'**il comprend un moyen de répartition de carburant entre une première injection de carburant et une injection principale de carburant assurant le maintien du couple de consigne en faisant varier la quantité de carburant de la première injection pour compenser la variation de couple entraînée par la variation de quantité de carburant de l'injection principale, en fonction de la température de combustion des particules du filtre à particules, avec augmentation de la quantité de carburant de l'injection principale tout en diminuant la quantité de carburant de la première injection pour augmenter la température de sortie des gaz d'échappement et initier ou entretenir la combustion des particules du filtre à particules, à couple constant.

9. Système selon la revendication 8, **caractérisé par le fait qu'**il comprend un capteur (7) de mesure de la température des gaz en amont du filtre à particules.

10. Système selon la revendication 8 **caractérisé par le fait qu'**il comprend un estimateur de la température des gaz en amont du filtre à particules.

11. Système selon l'une quelconque des revendications 8 à 10, **caractérisé par le fait qu'**il est associé à une unité de commande (3) du moteur (1) auquel ledit système est apte à envoyer un ordre de répartition de carburant entre la première injection et l'injection principale.

12. Moteur à combustion interne (1) comprenant un système d'admission de carburant (2), une unité de pilotage (3) apte à commander le système d'injection, et un filtre à particules (6) monté en sortie des gaz d'échappement, **caractérisé par le fait qu'**il comprend un système de régénération selon l'une quelconque des revendications 8 a 12.

## Claims

1. Method of controlling the regeneration of a particulate filter (6) for an internal combustion engine (1), in which a first injection of fuel and a main injection of fuel are carried out, an amount of fuel being distributed between the first injection and the main injection ensuring that the set torque is maintained while varying the amount of fuel in the first injection in order to compensate for the variation in torque caused by the variation in the amount of fuel in the main injection, according to the temperature of combustion of the particles in the particulate filter or of the temperature upstream of a turbine, and the amount of fuel in the main injection is increased while reducing the amount of fuel in the first injection in order to increase the exhaust gas outlet temperature and to initiate or sustain the combustion of the particles in the particulate filter, at constant torque.

2. Method according to Claim 1, in which the gas temperature upstream of the particulate filter and upstream of the turbine are measured.

3. Method according to Claim 1, in which the gas temperature upstream of the particulate filter is estimated.

4. Method according to any one of the preceding claims, in which the main injection is retarded by an angle ϕ relative to the top dead centre of a corresponding piston.

5. Method according to any one of the preceding claims, in which the first injection comprises two injection phases.

6. Method according to Claim 5, in which one injection phase takes place before the top dead centre of a corresponding piston and an injection phase takes place after the top dead centre of a corresponding piston.

7. Method according to Claim 5, in which an injection phase takes place immediately after the top dead centre of a corresponding piston.

8. System for regenerating a particulate filter (6) for an internal combustion engine (1), **characterized in that** it comprises a means of distributing fuel between a first injection of fuel and a main injection of fuel, ensuring that the set torque is maintained while varying the amount of fuel in the first injection in order to compensate for the variation in torque caused by the variation in the amount of fuel in the main injection, according to the temperature of combustion of the particles in the particulate filter, with an increase in the amount of fuel in the main injection while reducing the amount of fuel in the first injection in order to increase the exhaust gas outlet temperature and to initiate or sustain the combustion of the particles in the particulate filter, at constant torque.

9. System according to Claim 8, **characterized in that** it includes a sensor (7) for measuring the temperature of the gases upstream of the particulate filter.

10. System according to Claim 8, **characterized in that** it includes an estimator of the gas temperature upstream of the particulate filter.

11. System according to any one of Claims 8 to 10, **characterized in that** it is connected to a control unit (3) for controlling the engine (1) to which said system is capable of sending a command for distributing fuel between the first injection and the main injection.

12. Internal combustion engine (1) that includes a fuel intake system (2), a control unit (3) capable of controlling the injection system, and a particulate filter (6) on the exhaust gas exit side, **characterized in that** it includes a regeneration system according to any one of Claims 8 to 11.

## Patentansprüche

1. Verfahren zur Verwaltung der Regeneration eines Partikelfilters (6), der zur Ausstattung eines Verbrennungsmotors (1) gehört, bei dem eine erste Kraftstoffeinspritzung und eine Hauptkraftstoffeinspritzung angewendet werden, wobei eine Kraftstoffmenge zwischen der ersten Einspritzung und der Haupteinspritzung verteilt wird, wobei die Aufrechterhaltung des Solldrehmoments gewährleistet wird, indem die Kraftstoffmenge der ersten Einspritzung verändert wird, um die Drehmomentveränderung zu kompensieren, die von der Veränderung der Kraftstoffmenge der Haupteinspritzung bewirkt wird, in Abhängigkeit von der Brenntemperatur der Partikel des Partikelfilters oder der Temperatur stromaufwärts vor einer Turbine, und indem die Kraftstoffmenge der Haupteinspritzung erhöht wird, während die Kraftstoffmenge der ersten Einspritzung verringert wird, um die Ausgangstemperatur der Abgase zu erhöhen und die Verbrennung der Partikel des Partikelfilters zu initiieren oder aufrechtzuerhalten, bei konstantem Drehmoment.

2. Verfahren nach Anspruch 1, bei dem die Temperatur der Gase stromaufwärts vor dem Partikelfilter und stromaufwärts vor der Turbine gemessen wird.

3. Verfahren nach Anspruch 1, bei dem die Temperatur der Gase stromaufwärts vor dem Partikelfilter geschätzt wird.

4. Verfahren nach einem der vorhergehenden Ansprüche, bei dem die Haupteinspritzung um einen Winkel ϕ bezüglich des oberen Totpunkts eines entsprechenden Kolbens verzögert wird.

5. Verfahren nach einem der vorhergehenden Ansprüche, bei dem die erste Einspritzung zwei Einspritzphasen aufweist.

6. Verfahren nach Anspruch 5, bei dem eine Einspritzphase vor dem oberen Totpunkt eines entsprechenden Kolbens und eine Einspritzphase nach dem oberen Totpunkt eines entsprechenden Kolbens stattfindet.

7. Verfahren nach Anspruch 5, bei dem eine Einspritzphase direkt nach dem oberen Totpunkt eines entsprechenden Kolbens stattfindet.

8. System zur Regeneration eines Partikelfilters (6), der zur Ausstattung eines Verbrennungsmotors (1) gehört, **dadurch gekennzeichnet, dass** es ein Mittel zur Verteilung von Kraftstoff zwischen einer ersten Kraftstoffeinspritzung und einer Hauptkraftstoffeinspritzung aufweist, wobei die Aufrechterhaltung des Solldrehmoments gewährleistet wird, indem die Kraftstoffmenge der ersten Einspritzung verändert wird, um die Drehmomentveränderung zu kompensieren, die durch die Veränderung der Kraftstoffmenge der Haupteinspritzung bewirkt wird, in Abhängigkeit von der Verbrennungstemperatur der Partikel des Partikelfilters, mit Erhöhung der Kraftstoffmenge der Haupteinspritzung und gleichzeitiger Verringerung der Kraftstoffmenge der ersten Einspritzung, um die Ausgangstemperatur der Abgase zu erhöhen und die Verbrennung der Partikel des Partikelfilters zu initiieren oder aufrechtzuerhalten, bei konstantem Drehmoment.

9. System nach Anspruch 8, **dadurch gekennzeichnet, dass** es einen Sensor (7) zur Messung der Temperatur der Gase stromaufwärts vor dem Partikelfilter aufweist.

10. System nach Anspruch 8, **dadurch gekennzeichnet, dass** es eine Schätzfunktion der Temperatur der Gase stromaufwärts vor dem Partikelfilter aufweist.

11. System nach einem der Ansprüche 8 bis 10, **dadurch gekennzeichnet, dass** es einer Steuereinheit (3) des Motors (1) zugeordnet ist, an die das System einen Befehl zur Verteilung von Kraftstoff zwischen der ersten Einspritzung und der Haupteinspritzung senden kann.

12. Verbrennungsmotor (1), der ein Kraftstoffzulaufsystem (2), eine Steuereinheit (3), die fähig ist, das Einspritzsystem zu steuern, und einen Partikelfilter (6) aufweist, der am Ausgang der Abgase montiert ist, **dadurch gekennzeichnet, dass** er ein Regenerationssystem nach einem der Ansprüche 8 bis 11 aufweist.
